# EUROPEAN PATENT APPLICATION

(11) **EP 4 563 609 A1**
(43) Date of publication of application: **04.06.2025**
(21) Application number: 23846104.0
(22) Date of filing: 27.06.2023
(51) Int. Cl.: C08F 292/00, C08F 2/44, C08F 220/10, C08K 9/06, C08L 33/04

(54) **PHOTOCURABLE COMPOSITION, CURED PRODUCT OF SAME, AND COATED ARTICLE**

(30) Priority: 25.07.2022 JP 2022117694
(71) Applicant: SHIN-ETSU CHEMICAL CO., LTD., Tokyo 1000005 (JP)
(72) Inventor: YOSHII, Ryosuke, Annaka-shi Gunma 379-0224 (JP); HIGUCHI, Koichi, Annaka-shi Gunma 379-0224 (JP); MATSUMURA, Kazuyuki, Annaka-shi Gunma 379-0224 (JP)
(74) Representative: Mewburn Ellis LLP
(86) International application number: PCT/JP2023/023745
(87) International publication number: WO 2024/024370

(57) **Abstract**

Provided is a photocurable composition comprising
(A) surface-modified inorganic particles in which 1 to 30 parts by mass of at least one of an organosilicon compound represented by formula (1) and a hydrolysis product and a condensation product thereof is chemically bound to 100 parts by mass of inorganic particles and which have a median diameter of 1 to 60 nm in a volume-based particle size distribution,
(B) a bifunctional (meth)acrylate,
(C) a trifunctional (meth)acrylate and
(D) a photoradical initiator,
in which the blend amount of the component (A) is 10 to 35% by mass, and the total blend amount of the components (A), (B) and (C) is 70% by mass or more. 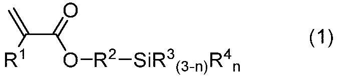 (In the formula, R¹ represents a hydrogen atom or the like; R² represents an alkylene group; R³ represents an alkyl group or the like; R⁴ represents an alkoxy group or the like; and n represents an integer of 1 to 3.)

## Description

### TECHNICAL FIELD

The present invention relates to a photocurable composition, a cured product thereof, and a coated article. More specifically, the invention relates to a photocurable composition of low viscosity which gives a cured product that exhibits excellent abrasion resistance, and to the cured product thereof and a coated article.

### BACKGROUND ART

Photocurable coating compositions, because they have a short curing time and are curable at low temperatures, are widely used as coatings for clear plastic materials. Compared with glass, plastic materials have a low surface hardness and the surface scratches easily. Hence, there is a desire for the photocurable coating films used thereon to have high transparency and good abrasion resistance.

In addition, from the standpoint of protecting the natural environment and simplifying the production process, there has existed a desire recently for the development of solvent-free photocurable coating compositions which do not require a solvent drying step and from which there are no emissions of volatile organic solvents into the atmosphere.

However, in order for a (meth)acrylic composition, for example, to exhibit excellent atmospheric curability and abrasion resistance in a cured film thereof, a large amount of high-viscosity multifunctional (meth)acrylic compound must be included in the composition. Unfortunately, this leads to considerable thickening of the coating composition. High-viscosity coatings are unsuitable for coating methods such as spray coating and flow coating, and so the coating methods that can be used are greatly limited. Accordingly, there has been a desire in recent years for solvent-free photocurable coating compositions which have both a low viscosity and excellent atmospheric curability and which moreover give an abrasion-resistant cured film.

Patent Documents 1 to 3 disclose, as a way of improving the abrasion resistance of coating films, the addition of inorganic particles to photocurable coating compositions. In particular, they report that the dispersibility in coatings and the abrasion resistance of the cured film improve with particles obtained by treating the surfaces of inorganic particles with an organic compound.

However, these photocurable coating compositions contain organic solvents; in a solvent-free state, they become high-viscosity compositions.

Patent Documents 4 and 5 disclose solvent-free photocurable coating compositions that contain surface-treated silica. However, with the use of silica, the compositions become highly viscous. Moreover, films obtained from these compositions are of insufficient transparency.

### PRIOR ART DOCUMENTS

### PATENT DOCUMENTS

Patent Document 1: JP-A 2017-132975
Patent Document 2: JP No. 6189547
Patent Document 3: JP-A 2008-150484
Patent Document 4: JP-A 2010-189620
Patent Document 5: JP-A 2020-012078

### SUMMARY OF INVENTION

### TECHNICAL PROBLEM

In light of these circumstances, an object of this invention is to provide a low-viscosity photocurable composition containing substantially no solvent which gives a cured film having both transparency and abrasion resistance. Further objects of the invention are to provide a cured product of the composition and an article coated with the cured product.

### SOLUTION TO PROBLEM

The inventors have conducted intensive investigations aimed at achieving the above objects. As a result, they have discovered that by compounding surface-modified organic particles obtained by modifying the surfaces of inorganic particles with a given (meth)acryloyl group-containing organosilicon compound, a difunctional (meth)acrylate, a trifunctional (meth)acrylate and a photoradical initiator in specific proportions, a photocurable composition can be obtained which has a low viscosity while being substantially solvent-free, and which gives a cured film having both transparency and abrasion resistance. This discovery ultimately led to the present invention. In this invention, "substantially solvent-free" means that the level of solvent contained in the composition is less than 10 wt%.

Accordingly, the invention provides:
1. A photocurable composition which includes:
   (A) surface-modified inorganic particles which are obtained by chemically bonding from 1 to 30 parts by weight of at least one compound selected from organosilicon compounds of formula (1) below 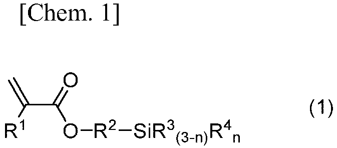 (wherein R¹ is a hydrogen atom or a methyl group, R² is an alkylene group of 1 to 20 carbon atoms, each R³ is independently a hydrogen atom or an alkyl group of 1 to 8 carbon atoms, each R⁴ is independently a hydroxyl group, an alkoxy group of 1 to 6 carbon atoms or a halogen atom, and n is an integer from 1 to 3) and hydrolyzates and condensates thereof to 100 parts by weight of inorganic particles and which have a median diameter of 1 to 60 nm in a volume-based particle size distribution,
   (B) a difunctional (meth)acrylate,
   (C) a trifunctional (meth)acrylate, and
   (D) a photoradical initiator,
   wherein the amount of component (A) included is from 10 to 35 wt% and the collective amount of components (A), (B) and (C) is at least 70 wt%;
2. The photocurable composition of 1 above, wherein the inorganic particles are silica particles;
3. The photocurable composition of 2 above, wherein the D90/D10 value in the volume-based particle size distribution of the surface-modified inorganic particles is 3.2 or less;
4. The photocurable composition of 2 or 3 above, wherein the surface-modified inorganic particles are sol-gel silica particles with a ratio Q⁴/Q of the peak area from -105 to -130 ppm (Q⁴) to the peak area from -80 to -130 ppm (Q) in the ²⁹Si-NMR spectrum of 0.8 or less that have been surface modified;
5. The photocurable composition of any of 1 to 4 above, wherein one or more compound selected from silane compounds of formula (5) below and disilazane compounds of formula (6) below

   R⁵₃SiY (5)

   R⁵₃Si-NH-SiR⁵₃ (6)

   (wherein each R⁵ is independently an alkyl group of 1 to 8 carbon atoms, and each Y is independently a hydroxyl group, an alkoxy group of 1 to 6 carbon atoms, an acyloxy group of 1 to 6 carbon atoms, an amino group or a halogen atom)
   is additionally chemically bonded to the surface-modified inorganic particles;
6. The photocurable composition of any of 1 to 5 above, wherein the composition has a volatile organic solvent content with respect to the overall composition of less than 10 wt%;
7. The photocurable composition of any of 1 to 6 above, wherein the composition has a kinematic viscosity at 25°C of 100 mm²/s or less;
8. A cured product obtained by curing the photocurable composition of any of 1 to 7 above; and
9. An article that is coated with the cured product of 8 above.

### ADVANTAGEOUS EFFECTS OF INVENTION

This invention makes it possible to obtain solvent-free photocurable compositions which have a low viscosity and which provide cured products of excellent transparency and abrasion resistance. As a result, the photocurable compositions of the invention can be employed in coating methods suitable for low-viscosity coatings, such as spray coating and flow coating. In addition, because the inventive compositions contain substantially no solvent, they are useful as low environmental-impact hardcoat materials.

### DESCRIPTION OF EMBODIMENTS

The invention is described more fully below. In this invention, "(meth)acryloyl group" refers to an acryloyl or methacryloyl group.

### [Photocurable Composition]

The photocurable composition of the invention includes components (A) to (D) below:
(A) surface-modified inorganic particles
(B) a difunctional (meth)acrylate
(C) a trifunctional (meth)acrylate, and
(D) a photoradical initiator.

### <(A) Surface-Modified Inorganic Particles>

Component (A) is surface-modified inorganic particles which are obtained by chemically bonding from 1 to 30 parts by weight of at least one compound selected from organosilicon compounds of formula (1) below and (partial) hydrolyzates and condensates thereof to 100 parts by weight of inorganic particles and which have a median diameter of 1 to 60 nm in a volume-based particle size distribution.

The dispersibility of inorganic particles in a photocurable composition can be enhanced by surface-modifying the inorganic particles, either by (partially) hydrolyzing the organosilicon compound of formula (1) below to give a silanol compound and using this to treat the inorganic particles and thus induce dehydrative condensation reactions with hydroxyl groups at the surfaces of the inorganic particles, or by using the above compound without hydrolyzing it so as to induce dealcoholizing condensation reactions between alkoxy groups on the compound and hydroxyl groups at the surfaces of the inorganic particles.

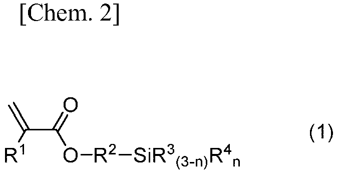

In the formula, R¹ is a hydrogen atom or a methyl group, R² is an alkylene group of 1 to 20 carbon atoms, each R³ is independently a hydrogen atom or an alkyl group of 1 to 8 carbon atoms, each R⁴ is independently a hydroxyl group, an alkoxy group of 1 to 6 carbon atoms or a halogen atom, and n is an integer from 1 to 3.

### (1) Inorganic Particles

The elements making up the inorganic particles used in the invention are exemplified by, without particular limitation, group 13 elements, group 14 elements (excluding carbon), first transition series elements, second transition series elements, third transition series elements and lanthanoids.

Oxide particles derived from, in particular, aluminum, boron, indium and the like are suitable as particles of group 13 element particles.

Metallic silicon particles and oxide particles derived from silicon, tin and the like are suitable as particles of group 14 elements (excluding carbon).

Oxide particles derived from titanium, manganese, zinc and the like are suitable as particles of first transition series elements. These oxides are often used as specific wavelength light-absorbing materials.

Silver particles and oxide particles derived from yttrium, zirconium and the like are suitable as particles of second transition series elements. These oxides are often used as specific wavelength light-absorbing and fluorescing materials.

Gold particles and oxide particles derived from hafnium, tantalum and the like are suitable as particles of third transition series elements.

Oxide particles derived from lanthanum, cerium, praseodymium, neodymium, terbium, dysprosium, ytterbium and the like are suitable as particles of lanthanoid elements.

One of these metal oxides may be used alone or two or more may be used in combination. "Combination" is used here in the broad sense of the term and includes both simple mixtures and metal oxides rendered into a composite through chemical bonds.

"Rendered into a composite through chemical bonds" refers to a form of the sort represented by general formula (8) below.

(M¹Oₓ)_{d}(M²O_{y})ₑ (8)

Here, M¹ is one element represented by any of the symbols Al, B, In, Si, Ge, Sn, Ti, Mn, Zn, Y, Zr, Hf, Ta, La, Ce, Pr, Nd, Tb, Dy and Yb; and M² is one element represented by any of the symbols Al, B, In, Si, Ge, Sn, Ti, Mn, Zn, Y, Zr, Hf, Ta, La, Ce, Pr, Nd, Tb, Dy and Yb, and which is not the same as the element selected as M¹. Also, the subscripts x and y may be expressed as follows: letting the valence of M¹ be a, x = a/2; and letting the valence of M² be b, y = b/2. The subscripts d and e are real numbers which satisfy the condition d+e = 1 and also satisfy the conditions 0 < d < 1 and 0 < e < 1. That is, in the structure, M¹ and M² have units which are bonded through oxygen.

M¹ and M² may be scattered within the structure or may be unevenly distributed. Particles in which M¹ and M² are scattered within the structure have the structure seen in cohydrolyzates of a plurality of metal alkoxides. Particles in which M¹ and M² are unevenly distributed within the structure have the structure seen in core-shell type composite particles (particles in which a small metal oxide particle serves as the core and which have a shell of another metal oxide outside of this core) and are formed by, for example, the stepwise hydrolysis of a plurality of metal alkoxides according to the types thereof.

The inorganic particles may be core-shell type composite fine particles in which one of the above-mentioned metal elements or metal oxides alone or a combination of two or more thereof serves as the core, and one of the above-mentioned metal elements or metal oxides alone or a combination of two or more thereof serves as the shell outside of this core. Examples of such core-shell type composite fine particles include core-shell type composite fine particles having a core of a titanium oxide-tin oxide complex oxide (titanium oxide fine particles doped with tin) and a silicon oxide shell on the outside of this core.

Specific examples of inorganic particles that can be used in this invention include particles of, for example, silica, aluminum oxide, titanium oxide, zinc oxide, cerium oxide, tin oxide, boron oxide and indium oxide. In cases where a dispersion of these particles is added to, for example, a coating material, because it is common for one or more type of inorganic particle to be used according to the intended purpose, the dispersion in this invention may include multiple types of inorganic fine particles. Among these inorganic particles, in terms of dispersibility in the composition and availability, silica particles are preferred.

When silica particles are used as the inorganic particles, letting D10 be the cumulative 10 vol % particle diameter and D90 be the cumulative 90 vol % particle diameter from the small particle diameter side in the volume-based particle size distribution by dynamic light scattering, the value D90/D10, although not particularly limited, is preferably 3.2 or less, and more preferably 3 or less. The lower limit of this value is preferably 1 or more. A D90/D10 value of 3.2 or less indicates that the particle size distribution is narrow. Such a particle size distribution is desirable in that, when the particles are added to a photocurable composition, the transparency and flowability of the composition are easy to regulate. Another advantage is that the abrasion resistance and cracking resistance of a cured film improve with the incorporation therein of particles having a high regularity.

When silica particles are used as the inorganic particles, although there is no particular limitation on the type of silica particles, wet silica particles prepared by the ion exchange method or the sol-gel method are preferred. Sol-gel silica particles that are obtained by the hydrolysis and condensation of a tetrafunctional silane compound and/or (partial) hydrolytic condensation products thereof and are substantially composed of SiO₂ units are preferred.

Having sol-gel silica particles that "are substantially composed of SiO₂ units" means that the particles are substantially made up of SiO₂ units, but are not made up solely of these units and have at least on the surface, as is commonly known, numerous silanol groups. Also, depending on the case, it means that some hydrolyzable groups (hydrocarbyloxy groups) from the tetrafunctional silane compound and/or partial hydrolytic condensation products thereof serving as the starting materials have not been converted to silanol groups and may remain unchanged at the particle surfaces and interior.

With regard to silica particles, the way to differentiate between silica prepared by the sol-gel process and silica prepared by the ion-exchange process is to compare the ratio of Q⁴ units to all Q units in the siloxane units (tetrafunctional siloxane units containing the Q¹ to Q⁴ units indicated in the formulas below) or to compare the alkali metal components.

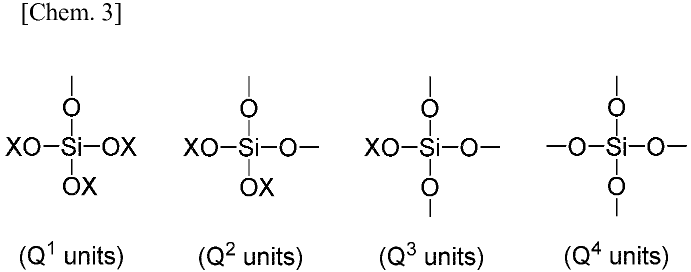

In these formulas, each X is independently a hydrogen atom or an alkyl group of 1 to 4 carbon atoms.

In this invention, the ratio of Q⁴ units to all Q units in the siloxane can be determined by ²⁹Si-NMR measurement. Specifically, this can be determined as the ratio Q⁴/Q of the peak area at -105 to -130 ppm (Q⁴) to the peak area at -80 to -130 ppm (Q).

In general, the Q⁴/Q ratio for the silica particles used in this invention is preferably 0.8 or less, more preferably from 0.2 to 0.8, and even more preferably from 0.55 to 0.75. When Q⁴/Q is from 0.2 to 0.8, the cured film has a better abrasion resistance.

In this invention, "peak area" refers to the area (integrated value) under a peak when the signal strength is plotted versus the chemical shift (parts per million (ppm)). In area calculation, it is preferable to establish a threshold in terms of the S/N ratio of a specific baseline. For example, the S/N ratio is preferably 5 or more, more preferably 10 or more, and even more preferably 20 or more. At less than 5, the baseline becomes thicker and the precision of integration worsens, which may be undesirable. Integration may be carried out by, for example, the Simpson method using a computer. Alternatively, peak areas may be determined by cutting a print medium of uniform planar density on which the spectrum is displayed in the shape of the spectrum and measuring the weight.

²⁹Si nuclear magnetic resonance spectroscopy may be carried out in either a solid or a liquid. However, in solid NMR spectroscopy, pretreatment of the measurement sample by drying to hardness is necessary and so the results do not necessarily reflect the bonding state of silicon within the sample. Identification by liquid-state NMR spectroscopy is thus preferred. At this time, because the ²⁹Si nucleus has a negative magnetogyric ratio (γ_{B}), the nuclear Overhauser effect is reversed, suppressing the magnetic relaxation of nuclei present around the resonant nucleus. Measurement conditions such that the negative nuclear Overhauser effect does not become pronounced are thus preferred.

In the case of pulsed Fourier transform NMR spectroscopy, this problem can be resolved by using a suitable pulse sequence. For example, it is preferable to use an off-resonance pulse sequence. In liquid ²⁹Si-NMR spectroscopy, measurement using, in the sample tube and probe, a material that does not contain silicon is preferred. An example of a material containing no silicon that may be used in NMR spectroscopy is polytetrafluoroethylene (Teflon^{®}).

A suitable relaxation agent for shortening the measurement time may be used in liquid ²⁹Si-NMR spectroscopy. Known reagents may be used as the relaxation agent (see for example Organometallics, Vol. 27, No. 4, pp. 500-502 (2008), and references therein). Chromium(III) acetylacetonate in particular has an excellent solubility in organic solvents and is highly desirable in that it does not induce titanium oxide agglomeration. For example, by using several drops of a solution of chromium(III) acetylacetonate dissolved in heavy chloroform (chloroform-d³) to a concentration of about 1 mol·dm⁻³, both a relaxation effect and a deuterium lock effect can be obtained, which is desirable.

Regarding resonance magnetic field notation, the difference with the resonance magnetic field when the resonance of the ²⁹Si nucleus in tetramethylsilane is used as the reference can be expressed in parts per million (ppm). When this notation is followed, Q units can often be detected in the range of -80 to -130 ppm, T units (XSiO_{3/2} (where X is the same as above; the same applies below) in the range of -30 to -80 ppm, D units (X²SiO_{2/2}) in the range of -10 to -30 ppm and M units (X³SiO_{1/2}) in the range of -10 to 15 ppm. A negative value in the notation indicates that there is a difference in the resonance magnetic field on the upfield side from the reference line. The width of the resonance line depends on the strength of the magnetic field in the NMR unit used for measurement; the preferred resonance line ranges mentioned above are the values for an illustrative case in which a 11.75 T (tesla) magnetic field is applied. The magnetic field which may be used in an NMR unit is preferably at least 5T and up to 20 T, more preferably at least 8 T and up to 15 T, and even more preferably at least 10 T and up to 13 T. At a magnetic field below 5 T, the S/N ratio becomes small, which can make measurement difficult. At a magnetic field greater than 20 T, the NMR unit becomes very large, which can make measurement difficult.

### (2) Organosilicon Compound

The organosilicon compound used in the invention is represented by formula (1) below.

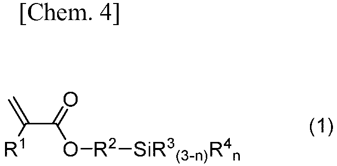

In the formula, R¹ is a hydrogen atom or a methyl group, R² is an alkylene group of 1 to 20 carbon atoms, each R³ is independently a hydrogen atom or an alkyl group of 1 to 8 carbon atoms, each R⁴ is independently a hydrogen atom, an alkoxy group of 1 to 6 carbon atoms or a halogen atom, and n is an integer from 1 to 3.

In formula (1), the alkylene group of 1 to 20 carbon atoms represented by R² may be linear, branched or cyclic. Specific examples include methylene, ethylene, trimethylene, propylene, tetramethylene, pentamethylene, hexamethylene, heptamethylene, octamethylene, nonamethylene and cyclohexylene groups. In cases where the number of carbon atoms is high (8 or more), the flowability and shelf stability of the surface-modified inorganic particles is especially good; in cases where the number of carbon atoms is low (3 or less), the improvement in abrasion resistance when incorporated into a cured film is especially effective.

The alkyl group of 1 to 8 carbon atoms represented by R³ may be linear, branched or cyclic. Specific examples include methyl, ethyl, n-propyl, isopropyl, n-butyl, sec-butyl, tert-butyl, pentyl, hexyl, cyclopentyl and cyclohexyl groups. Alkyl groups having from 1 to 3 carbon atoms are preferred; of these, the methyl group with its small steric hindrance is especially preferred because it does not hinder reactions with inorganic particle surfaces.

Each R⁴ is independently a hydroxyl group, an alkoxy group of 1 to 6 carbon atoms or a halogen atom. Examples of halogen atoms include fluorine, chlorine, bromine and iodine.

Examples of the alkoxy group represented by R⁴ include methoxy, ethoxy and n-propoxy groups.

Of these, alkoxy groups are preferred. Taking into consideration the reactivity with inorganic particle surfaces, the methoxy group is especially preferred.

The subscript n is an integer from 1 to 3. Taking into consideration the reactivity with inorganic particle surfaces, 2 or 3 is preferred, and 3 is more preferred. In formula (1), when n is 2 or 3, the R⁴ groups may be the same groups or may be different groups.

Specific examples of organosilicon compounds of formula (1) above include (meth)acryloyloxymethylmethyldimethoxysilane, (meth)acryloyloxymethyltrimethoxysilane, (meth)acryloyloxymethylmethyldiethoxysilane, (meth)acryloyloxymethyltriethoxysilane, (meth)acryloyloxymethyltrihydroxysilane, (meth)acryloyloxymethylethyldimethoxysilane, (meth)acryloyloxymethylpropyldimethoxysilane, 2-(meth)acryloyloxyethylmethyldimethoxysilane, 2-(meth)acryloyloxyethyltrimethoxysilane, 2-(meth)acryloyloxyethylmethyldiethoxysilane, 2-(meth)acryloyloxyethyltriethoxysilane, 2-(meth)acryloyloxyethyltrihydroxysilane, 2-(meth)acryloyloxyethylethyldimethoxysilane, 2-(meth)acryloyloxyethylpropyldimethoxysilane, 3-(meth)acryloyloxypropylmethyldimethoxysilane, 3-(meth)acryloyloxypropyltrimethoxysilane, 3-(meth)acryloyloxypropylmethyldiethoxysilane, 3-(meth)acryloyloxypropyltriethoxysilane, 3-(meth)acryloyloxypropyltrihydroxysilane, 3-(meth)acryloyloxypropylethyldimethoxysilane, 3-(meth)acryloyloxypropylpropyldimethoxysilane, 4-(meth)acryloyloxybutylmethyldimethoxysilane, 4-(meth)acryloyloxybutyltrimethoxysilane, 4-(meth)acryloyloxybutylmethyldiethoxysilane, 4-(meth)acryloyloxybutyltriethoxysilane, 4-(meth)acryloyloxybutyltrihydroxysilane, 4-(meth)acryloyloxybutylethyldimethoxysilane, 4-(meth)acryloyloxybutylpropyldimethoxysilane, 5-(meth)acryloyloxypentylmethyldimethoxysilane, 5-(meth)acryloyloxypentyltrimethoxysilane, 5-(meth)acryloyloxypentylmethyldiethoxysilane, 5-(meth)acryloyloxypentyltriethoxysilane, 5-(meth)acryloyloxypentyltrihydroxysilane, 5-(meth)acryloyloxypentylethyldimethoxysilane, 5-(meth)acryloyloxypentylpropyldimethoxysilane, 6-(meth)acryloyloxyhexylmethyldimethoxysilane, 6-(meth)acryloyloxyhexyltrimethoxysilane, 6-(meth)acryloyloxyhexylmethyldiethoxysilane, 6-(meth)acryloyloxyhexyltriethoxysilane, 6-(meth)acryloyloxyhexyltrihydroxysilane, 6-(meth)acryloyloxyhexylethyldimethoxysilane, 6-(meth)acryloyloxyhexylpropyldimethoxysilane, 7-(meth)acryloyloxyheptylmethyldimethoxysilane, 7-(meth)acryloyloxyheptyltrimethoxysilane, 7-(meth)acryloyloxyheptylmethyldiethoxysilane, 7-(meth)acryloyloxyheptyltriethoxysilane, 7-(meth)acryloyloxyheptyltrihydroxysilane, 7-(meth)acryloyloxyheptylethyldimethoxysilane, 7-(meth)acryloyloxyheptylpropyldimethoxysilane, 8-(meth)acryloyloxyoctylmethyldimethoxysilane, 8-(meth)acryloyloxyoctyltrimethoxysilane, 8-(meth)acryloyloxyoctylmethyldiethoxysilane, 8-(meth)acryloyloxyoctyltriethoxysilane, 8-(meth)acryloyloxyoctyltrihydroxysilane, 8-(meth)acryloyloxyoctylethyldimethoxysilane, 8-(meth)acryloyloxyoctylpropyldimethoxysilane, 9-(meth)acryloyloxynonylmethyldimethoxysilane, 9-(meth)acryloyloxynonyltrimethoxysilane, 9-(meth)acryloyloxynonylmethyldiethoxysilane, 9-(meth)acryloyloxynonyltriethoxysilane, 9-(meth)acryloyloxynonyltrihydroxysilane, 9-(meth)acryloyloxynonylethyldimethoxysilane, 9-(meth)acryloyloxynonylpropyldimethoxysilane, 10-(meth)acryloyloxydecylmethyldimethoxysilane, 10-(meth)acryloyloxydecyltrimethoxysilane, 10-(meth)acryloyloxydecylmethyldiethoxysilane, 10-(meth)acryloyloxydecyltriethoxysilane, 10-(meth)acryloyloxydecyltrihydroxysilane, 10-(meth)acryloyloxydecylethyldimethoxysilane, 10-(meth)acryloyloxydecylpropyldimethoxysilane, 11-(meth)acryloyloxyundecylmethyldimethoxysilane, 11-(meth)acryloyloxyundecyltrimethoxysilane, 11-(meth)acryloyloxyundecylmethyldiethoxysilane, 11-(meth)acryloyloxyundecyltriethoxysilane, 11-(meth)acryloyloxyundecyltrihydroxysilane, 11-(meth)acryloyloxyundecylethyldimethoxysilane, 11-(meth)acryloyloxyundecylpropyldimethoxysilane, 12-(meth)acryloyloxydodecylmethyldimethoxysilane, 12-(meth)acryloyloxydodecyltrimethoxysilane, 12-(meth)acryloyloxydodecylmethyldiethoxysilane, 12-(meth)acryloyloxydodecyltriethoxysilane, 12-(meth)acryloyloxydodecyltrihydroxysilane, 12-(meth)acryloyloxydodecylethyldimethoxysilane, 12-(meth)acryloyloxydodecylpropyldimethoxysilane, 13-(meth)acryloyloxytridecylmethyldimethoxysilane, 13-(meth)acryloyloxytridecyltrimethoxysilane, 13-(meth)acryloyloxytridecylmethyldiethoxysilane, 13-(meth)acryloyloxytridecyltriethoxysilane, 13-(meth)acryloyloxytridecyltrihydroxysilane, 13-(meth)acryloyloxytridecylethyldimethoxysilane, 13-(meth)acryloyloxytridecylpropyldimethoxysilane, 14-(meth)acryloyloxytetradecylmethyldimethoxysilane, 14-(meth)acryloyloxytetradecyltrimethoxysilane, 14-(meth)acryloyloxytetradecylmethyldiethoxysilane, 14-(meth)acryloyloxytetradecyltriethoxysilane, 14-(meth)acryloyloxytetradecyltrihydroxysilane, 14-(meth)acryloyloxytetradecylethyldimethoxysilane, and 14-(meth)acryloyloxytetradecylpropyldimethoxysilane.
These may be used singly or two or more may be used together.

Of these, compounds of formulas (2) to (4) below are especially preferred. 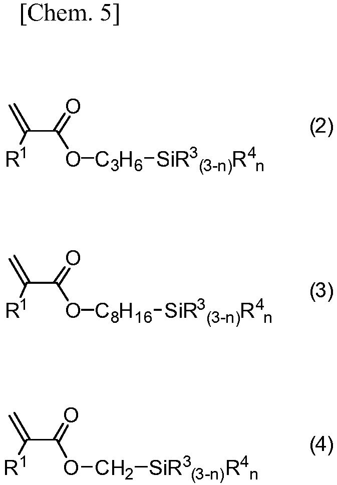 (wherein R¹, R³, R⁴ and n are the same as above)

In particular, in terms of enhancing the abrasion resistance of the applied film and of the availability, 3-(meth)acryloyloxypropyltrimethoxsilane, 8-(meth)acryloyloxyoctyltrimethoxysilane and (meth)acryloyloxymethyltrimethoxysilane are preferred.

The organosilicon compound of formula (1) above is used in an amount per 100 parts by weight of inorganic particles which, to enhance the abrasion resistance by increasing the crosslink density and to enhance the dispersibility in the photocurable composition and the flowability, is from 1 to 30 parts by weight, and preferably from 10 to 20 parts by weight.

### (3) Other Silane Compounds

The surface-modified inorganic particles serving as component (A) may be additionally surface-modified with one or more silane compound of formula (5) and/or formula (6) below.

R⁵₃SiY (5)

R⁵₃Si-NH-SiR⁵₃ (6)

In formula (5), each R⁵ is independently a monovalent hydrocarbon group of 1 to 20 carbon atoms, preferably 1 to 4 carbon atoms, and more preferably 1 or 2 carbon atoms.

The monovalent hydrocarbon group represented by R⁵ may be linear, branched or cyclic, and is exemplified by alkyl, alkenyl, aryl and aralkyl groups.

Specific examples of the monovalent hydrocarbon group represented by R⁵ include alkyl groups such as methyl, ethyl, n-propyl, isopropyl and n-butyl groups; alkenyl groups such as vinyl and allyl groups; aryl groups such as phenyl and tolyl groups; and aralkyl groups such as 2-phenylethyl and 2-phenylpropyl groups. Of these, alkyl groups such as methyl, ethyl and n-propyl groups are preferred; methyl and ethyl groups are especially preferred. Some or all hydrogen atoms on these monovalent hydrocarbon groups may be substituted with halogen atoms such as fluorine, chlorine or bromine; fluorine atoms are preferred.

Y is a hydroxyl group, an alkoxy group of 1 to 6 carbon atoms, an amino group, an acyloxy group or a halogen atom. Examples of alkoxy groups include methoxy, ethoxy and n-propoxy groups. Examples of amino groups include N,N-dimethylamino and N,N-diethylamino groups. An example of an acyloxy group is the acetoxy group. Examples of halogen atoms include the same ones as those mentioned above. Of these, a hydroxyl group and a methoxy group are preferred.

Specific examples of compounds of formula (5) include monosilanol compounds such as trimethylsilanol and triethylsilanol; monochlorosilanes such as trimethylchlorosilane and triethylchlorosilane; monoalkoxysilanes such as trimethylmethoxysilane and trimethylethoxysilane; monoaminosilanes such as trimethylsilyldimethylamine and trimethylsilyldiethylamine; and monoacyloxysilanes such as trimethylacetoxysilane. These may be used singly or two or more may be used together.

Of these, trimethylsilanol, trimethylmethoxysilane and trimethylsilyldiethylamine are preferred; trimethylsilanol and trimethylmethoxysilane are especially preferred.

Specific examples of compounds of formula (6) include hexamethyldisilazane, hexaethyldisilazane, hexapropyldisilazane, hexa(n-butyl)disilazane, hexa(i-butyl)disilazane, hexa(t-butyl)disilazane, hexapentyldisilazane, hexahexyldisilazane, hexaheptyldisilazane, hexaoctyldisilazane and hexa(2-ethylhexyl)disilazane. These may be used singly or two or more may be used together.

Of these, hexamethyldisilazane is preferred.

When compounds of formula (5) and/or formula (6) above are used, the amount of use thereof per 100 parts by weight of the inorganic particles is preferably from 1 to 20 parts by weight, more preferably from 5 to 15 parts by weight, and even more preferably from 8 to 12 parts by weight. Setting the amount of use to 20 parts by weight or less is desirable in that the residual presence of unreacted silane compound can be suppressed and the cured product has a good abrasion resistance. Setting the amount of use to 1 part by weight or more is desirable in that the inorganic particle dispersion has a good shelf stability.

The surface-modified inorganic particles serving as component (A) have a median diameter (D50), which is the cumulative 50 vol % particle diameter in the volume-based particle size distribution, of from 1 to 60 nm, preferably from 5 to 40 nm, and more preferably from 10 to 30 nm. When D50 is less than 1 nm, the cured film has an inferior abrasion resistance. When D50 is greater than 60 nm, there is a loss of transparency in the cured film.

The above median diameter can be measured by the dynamic light scattering method using laser light with an apparatus such as the Nanotrac UPA-EX150 (Nikkiso Co., Ltd.).

In the volume-based particle size distribution of the surface-modified inorganic particles determined by the dynamic light scattering method, the D90/D10 value, although not particularly limited, is preferably 3.2 or less, and more preferably 3 or less. The lower limit value, although not particularly limited, is preferably 1 or more.

Component (A) is included in an amount of from 10 to 35 wt%, preferably from 20 to 30 wt%, of the photocurable composition. At a surface-modified inorganic particle content below 10 wt%, the photocurability and abrasion resistance are inadequate; at more than 35 wt%, the viscosity of the composition becomes too high.

Component (A) may be added to the photocurable composition of the invention in the form of a powder. However, preparation beforehand as a dispersion using the subsequently described difunctional (meth)acrylate of component (B) and/or the trifunctional (meth)acrylate of component (C) as the dispersing medium, followed by mixture with the composition is preferred because particle agglomeration can be prevented while holding down the amount of volatile organic solvent used.

### (4) Method for Preparing Surface-Modified Inorganic Particles

Next, an example of a method for preparing the surface-modified inorganic particles of the invention is described in detail.

Component (A) used in this invention is surface-modified inorganic particles obtained by surface-treating inorganic particles. When silica particles are used as the inorganic particles, preparation may be carried out by a method that includes the following steps (α), (β) and, if necessary, (y).
Step (α): Synthesis of sol-gel silica particles
Step (β): Surface treatment of sol-gel particles with organosilicon compound
Step (γ): Dispersion medium substitution

The steps are each described below.

### • Step (α): Synthesis of Sol-Gel Silica Particles

Step (α) carries out the hydrolytic condensation of at least one compound from among silane compounds of formula (7) below and (partial) hydrolyzates and condensates thereof within a mixed solvent of a hydrophilic organic solvent and water and in the presence of a basic substance to give an organic solvent/aqueous dispersion of hydrophilic sol-gel silica particles.

Si(OR⁶)₄ (7)

In formula (7), each R⁶ is independently a hydrogen atom or a monovalent hydrocarbon group of 1 to 6 carbon atoms.

The monovalent hydrocarbon group represented by R⁶ is exemplified by the same monovalent hydrocarbon groups as those having 1 to 6 carbon atoms mentioned above as examples of R⁵, and is more preferably one having from 1 to 4 carbon atoms, even more preferably an alkyl group such as methyl, ethyl, n-propyl or n-butyl, and still more preferably a methyl or ethyl group.

Specific examples of silane compounds of formula (7) above include tetraalkoxysilanes such as tetramethoxysilane, tetraethoxysilane, tetra-n-propoxysilane, tetra-n-butoxysilane; and tetraaryloxysilanes such as tetraphenoxysilane.

Of these, tetramethoxysilane, tetraethoxysilane, tetra-n-propoxysilane and tetra-n-butoxysilane are preferred; tetramethoxysilane and tetraethoxysilane are especially preferred. Examples of these hydrolytic condensates include methyl silicate and ethyl silicate.

Hydrophilic organic solvents that may be used for hydrolytic condensation of the silane compound are not particularly limited so long as they are ones that dissolve water and at least one compound from among silane compounds of formula (7) and (partial) hydrolyzates and condensates thereof. Examples of such organic solvents include alcohols such as methanol, ethanol, n-propanol, isopropanol and n-butanol; cellosolves such as methyl cellosolve, ethyl cellosolve, butyl cellosolve and cellosolve acetate; ketones such as acetone and methyl ethyl ketone; and ethers such as dioxane and tetrahydrofuran.

Of these, alcohols and cellosolves are preferred, alcohols are more preferred, and methanol and ethanol are especially preferred. When the number of carbon atoms on the alcohol increases, the particle diameter of the spherical silica particles that form becomes larger. Therefore, methanol is preferable for obtaining the desired small-diameter silica particles.

Specific examples of the basic substance include ammonia, dimethylamine and diethylamine. Ammonia and diethylamine are preferred, and ammonia is especially preferred. These basic substances are dissolved in the required amount of water, following which the resulting aqueous solution (basic) is mixed with the above hydrophilic organic solvent.

The amount of water used in Step (α) per mole of the collective amount of hydrocarbyloxy groups in the silane compound of formula (7) and (partial) hydrolyzates and condensates thereof is preferably from 0.5 to 5 moles, more preferably from 0.6 to 3 moles, and even more preferably from 0.7 to 2 moles.

The ratio of hydrophilic organic solvent to water, expressed as a weight ratio, is preferably from 0.5 to 10, more preferably from 2 to 9, and even more preferably from 3 to 8. The greater the amount of hydrophilic organic solvent at this time, the smaller the size of the silica particles.

The amount of basic substance per mole of the collective amount of hydrocarbyloxy groups in the tetrafunctional silane compound of general formula (7) and (partial) hydrolyzates and condensates thereof is preferably from 0.01 to 2 moles, more preferably from 0.02 to 0.5 mole, and even more preferably from 0.04 to 0.12 mole. The smaller the amount of basic substance at this time, the smaller the size of the silica particles.

Hydrolysis and condensation of the silane compound of formula (7) above may be carried out by a commonly known method. For example, it may be carried out by adding the above silane compound to a basic substance-containing mixture of hydrophilic organic solvent and water.

Following addition of the silane compound of formula (7), reaction is preferably carried out at, for example, a reaction temperature of between 20°C and 120°C and a reaction time of from 1 to 8 hours, and more preferably a reaction temperature of between 20°C and 100°C and a reaction time of from 1 to 6 hours.

The concentration of sol-gel silica particles in the organic solvent/water dispersion in Step (α) is preferably from 5 to 30 wt%, and more preferably from 10 to 25 wt%.

### • Step (β): Surface Treatment of Silica Particles

This is a step which adds at least one compound from among organosilicon compounds of formula (1) below and (partial) hydrolyzates and condensates thereof to the hydrophilic sol-gel silica particle dispersion obtained in Step (α), and treats the surfaces of the hydrophilic spherical silica particles. 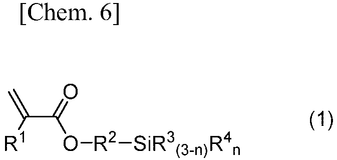 In this formula, R¹, R², R³, R⁴ and n are the same as above.

The organosilicon compound of formula (1) above is exemplified by the same compounds as those mentioned above as examples. The amount of use thereof is also the same as above.

The silica particles used in this invention may be additionally surface-modified with one or more silane compound of formula (5) and/or formula (6) below.

R⁵₃SiY (5)

R⁵₃Si-NH-SiR⁵₃ (6)

In these formulas, R⁵ and Y are the same as above.

The compounds of formulas (5) and (6) are each exemplified by the same compounds as mentioned above. The amounts in which they are used are also the same as above.

To promote the reaction of the above organosilicon compound and, depending on the case, silane compounds with silica surfaces, the hydrophilic spherical silica particle dispersion used in Step (β) preferably includes a basic substance. The basic substance is exemplified by the same substances as mentioned above in connection with Step (α). Ammonia and diethylamine are preferred; ammonia is especially preferred. When ammonia is used, the surface treatment efficiency improves. Moreover, because removal by distillation is possible, it is effective for simplifying the purification process.

When a basic substance is used, the amount thereof is preferably from 1 to 5 moles, and more preferably from 2 to 3 moles, per mole of hydrolyzable groups on the compound of formula (1) above and, depending on the case, the compounds of formula (5) and/or (6).

The hydrolytic condensation reaction (surface treatment) in Step (β) may be carried out under the same conditions as in Step (α). For example, reaction at a temperature of between 20°C and 120°C and for a period of from 1 to 8 hours is preferred; reaction at a temperature of between 20°C and 100°C and for a period of 1 to 6 hours is more preferred.

### • Step (γ): Dispersion Medium Substitution

This is a step which, if necessary, adds the subsequently described difunctional (meth)acrylate of component (B) and/or trifunctional (meth)acrylate of component (C) to the dispersion of silica particles surface-modified with an organosilicon compound obtained in Step (β), and removes by distillation the above-mentioned hydrophilic organic solvent, water and, in some cases, alcohol that has formed due to condensation.

At this time, the (B) difunctional (meth)acrylate and/or (C) trifunctional (meth)acrylate may be added beforehand to the dispersion or may be added to the dispersion after starting to distill off alcohol and the like, although it is preferable to first add (B) and/or (C) to the dispersion and then carry out distillation.

With this step, a dispersion in (B) a difunctional (meth)acrylate and/or (C) a trifunctional (meth)acrylate of silica particles that have been surface-treated with an organosilicon compound can be obtained.

Examples of methods for distilling off the hydrophilic organic solvent, water, and volatile by-products such as alcohols that have formed due to condensation include atmospheric pressure distillation and vacuum distillation.

When heating is carried out in vacuum distillation, the temperature is preferably between 30°C and 100°C, more preferably between 40°C and 80°C, and even more preferably between 50°C and 70°C. Heating to 30°C or more is desirable because the time required for solvent distillation can be shortened. Setting the temperature to 100°C or less is desirable because heat-induced side reactions such polymerization of the acrylic compounds and transesterification between the solvent and the acrylic sites can be suppressed and the scratch resistance of the resulting cured film when (B) and/or (C) are added to the photocurable composition sometimes improves.

The amount of difunctional (meth)acrylate and/or trifunctional (meth)acrylate added is not particularly limited. However, it is preferable to disperse from 5 to 250 parts by weight, more preferable to disperse from 10 to 200 parts by weight, even more preferable to disperse from 25 to 150 parts by weight, and most preferable to disperse from 50 to 125 parts by weight, of surface-modified silica particles per 100 parts by weight of (B) difunctional (meth)acrylate and/or (C) trifunctional (meth)acrylate in the silica dispersion obtained in Step (γ). With the dispersion of 5 parts by weight or more of silica, when difunctional (meth)acrylate and/or trifunctional (meth)acrylate are added to the photocurable composition, the scratch resistance-improving effect on the resulting cured film is good. With the dispersion of 250 parts by weight or less, the flowability of the dispersion is good.

By including in the silica dispersion thus obtained, within ranges that do not detract from the advantageous effects of the invention, such additives as base-neutralizing agents, acid-neutralizing agents, base adsorbents, acid adsorbents, polymerization inhibitors, antioxidants, ultraviolet absorbers and light stabilizers, the shelf stability can be increased.

### <(B) Difunctional (Meth)acrylate>

Component (B) is a difunctional (meth)acrylate. Examples of the difunctional (meth)acrylate include dipropylene glycol diacrylate, tripropylene glycol diacrylate, 1,4-butanediol diacrylate, 1,6-hexanediol diacrylate (HDDA), tetraethylene glycol diacrylate, neopentyl glycol diacrylate, 3-methyl-1,5-pentanediol diacrylate, 1,9-nonanediol diacrylate, dimethylol tricyclodecane diacrylate, neopentyl glycol hydroxypivalate acrylic acid adduct, 2-hydroxy-3-acryloyloxypropyl methacrylate, ethylene glycol diacrylate, polyethylene glycol (n = 2 to 15) diacrylate, polypropylene glycol (n = 2 to 15) diacrylate, polybutylene glycol (n = 2 to 15) diacrylate and trimethylolpropane diacrylate. These compounds may be used singly or two or more may be used together.

Of these, from the standpoint of curability and low viscosity, dipropylene glycol diacrylate, tripropylene glycol diacrylate, 1,4-butanediol diacrylate, 1,6-hexanediol diacrylate (HDDA), tetraethylene glycol diacrylate, neopentyl glycol diacrylate, 3-methyl-1,5-pentanediol diacrylate and 1,9-nonanediol diacrylate are preferred.

The content of the difunctional (meth)acrylate serving as component (B) is preferably at least 10 wt%, more preferably from 10 to 45 wt%, and even more preferably from 20 to 45 wt%, of the overall photocurable composition. A difunctional (meth)acrylate compound content of 10 wt% or more is desirable because thickening of the composition can be prevented. A difunctional (meth)acrylate compound content of 45 wt% or less is desirable because the photocurability and scratch resistance are good.

### <(C) Trifunctional (Meth)acrylate>

Component (C) is a trifunctional (meth)acrylate. Examples of the trifunctional (meth)acrylate of component (C) include trimethylolpropane triacrylate (TMPTA), trimethylolpropane ethoxy triacrylate, glycerol propoxy triacrylate, tris(2-acryloxyethyl) isocyanurate and pentaerythritol triacrylate. These may be used singly or two or more may be used together.

Of these, from the standpoint of curability and low viscosity, trimethylolpropane triacrylate (TMPTA), trimethylolpropane ethoxy triacrylate and glycerol propoxy triacrylate are preferred.

The content of component (C) is preferably at least 5 wt%, more preferably from 5 to 75 wt%, and even more preferably from 9 to 70 wt%, of the overall photocurable composition. A trifunctional (meth)acrylate compound content of 5 wt% or more is desirable because the photocurability and abrasion resistance are good. A trifunctional (meth)acrylate compound content of 75 wt% or less is desirable because thickening of the composition can be prevented.

The collective content of components (A), (B) and (C) is at least 70 wt%, preferably from 70 to 98 wt%, and more preferably from 80 to 95 wt%, of the overall composition. At less than 70 wt%, the photocurability and abrasion resistance are inadequate.

### <(D) Photoradical Initiator>

Component (D) is a photoradical initiator. Specific examples of the photoradical initiator of component (D) include acetophenone, propiophenone, 2,2-dimethoxy-1,2-diphenylethan-1-one (OMNIRAD 651, from IGM RESINS), 2-hydroxy-2-methyl-1-phenylpropan-1-one (OMNIRAD 1173, from IGM RESINS), 1-hydroxycyclohexyl phenyl ketone (OMNIRAD 184, IGM RESINS), 1-[4-(2-hydroxyethoxy)phenyl]-2-hydroxy-2-methyl-1-propan-1-one (OMNIRAD 2959, IGM RESINS), 2-hydroxy-1-{4-[4-(2-hydroxy-2-methyl-propionyl)benzyl]phenyl}-2-methyl-propan-1-one (OMNIRAD 127, from IGM RESINS), 2-methyl-1-(4-methylthiophenyl)-2-morpholinopropan-1-one (OMNIRAD 907, from IGM RESINS), 2-benzyl-2-dimethylamino-(4-morpholinophenyl)butanone-1 (OMNIRAD 369, from IGM RESINS), 2-(dimethylamino)-2-[(4-methylphenyl)methyl]-1-[4-(4-morpholinyl)phenyl]-1-butanone (OMNIRAD 379, from IGM RESINS), 2,4,6-trimethylbenzoyl diphenyl phosphine oxide (OMNIRAD TPO-H, from IGM RESINS) and bis(2,4,6-trimethylbenzoyl) phenyl phosphine oxide (OMNIRAD 819, from IGM RESINS); 1-[4-(phenylthio)phenyl]-1,2-octanedione 2-(O-benzoyloxime) (IRGACURE OXE 01, from BASF) and 1-[9-ethyl-6-(2-methylbenzoyl)-9H-carbazol-3-yl]ethanone 1-(O-acetyloxime) (IRGACURE OXE 02, from BASF); and a blend of oxyphenylacetic acid 2-[2-oxo-2-phenylacetoxyethoxy]ethyl ester and oxyphenylacetic acid 2-(2-hydroxyethoxy)ethyl ester (OMNIRAD 754, from IGM RESINS), phenylglyoxylic acid methyl ester (OMNIRAD MBF, from IGM RESINS), ethyl-4-dimethylaminobenzoate (DAROCUR EDB, from IGM RESINS), 2-ethylhexyl-4-dimethylaminobenzoate, bis(2,6-dimethoxybenzoyl)-2,4,4-trimethylpentyl phosphine oxide, benzoyl peroxide and cumene peroxide. These may be used singly or two or more may be used together.

To provide an even better photocurability and abrasion resistance, component (D) preferably includes both an alkylphenone compound and an acyl phosphine oxide compound, and more preferably includes a combination of an alkylphenone compound selected from, for example, 2-hydroxy-2-methyl-1-phenyl propan-1-one (OMNIRAD 1173, from IGM RESINS), 1-hydroxycyclohexyl phenyl ketone (OMNIRAD 184, from IGM RESINS), 1-[4-(2-hydroxyethoxy)phenyl]-2-hydroxy-2-methyl-1-propan-1-one (OMNIRAD 2959, from IGM RESINS), 2-hydroxy-1-{4-[4-(2-hydroxy-2-methylpropionyl)benzyl]phenyl}-2-methyl-propan-1-one (OMNIRAD 127, from IGM RESINS), 2-methyl-1-(4-methylthiophenyl)-2-morpholinopropan-1-one (OMNIRAD 907, from IGM RESINS), 2-benzyl-2-dimethylamino-(4-morpholinophenyl)-1-butanone (OMNIRAD 369, from IGM RESINS), 2-(dimethylamino)-2-[(4-methylphenyl)methyl]-1-[4-(4-morpholinyl)phenyl]-1-butanone (OMNIRAD 379, from IGM RESINS) with an acyl phosphine oxide compound selected from, for example, 2,4,6-trimethylbenzoyl diphenyl phosphine oxide (OMNIRAD TPO-H, from IGM RESINS) and bis(2,4,6-trimethylbenzoyl) phenyl phosphine oxide (OMNIRAD 819, from IGM RESINS).

The amount of component (D) included is preferably from 2 to 15 wt%, and more preferably from 5 to 10 wt%, of the overall photocurable composition. A photoradical initiator content of 2 wt% or more is desirable because the photocurability and abrasion resistance are good. A photoradical initiator content of 15 wt% or less is desirable because yellowing and a decrease in abrasion resistance can be prevented.

### <(E) Other (Meth)acrylates>

In addition to the above (B) difunctional (meth)acrylate and (C) trifunctional (meth)acrylate, the photocurable composition of the invention may include, within a range that does not detract from the advantageous effects of the invention, monofunctional (meth)acrylates and multifunctional (meth)acrylates having a functionality of four or more.

Examples of monofunctional (meth)acrylates include ethyl acrylate, butyl acrylate, ethylhexyl acrylate, 2-hydroxyethyl acrylate, isobornyl acrylate and tetrahydrofurfuryl acrylate.

Examples of multifunctional (meth)acrylates include pentaerythritol tetraacrylate, ethoxylated pentaerythritol tetraacrylate, dipentaerythritol tetraacrylate, dipentaerythritol pentaacrylate, dipentaerythritol hexaacrylate (DPHA), caprolactone-modified dipentaerythritol hexaacrylate (an acrylated adduct of dipentaerythritol and ε-caprolactone), caprolactone-modified dipentaerythritol hydroxypentaacrylate, ditrimethylolpropane tetraacrylate, N-vinylpyrrolidone, aliphatic urethane acrylate oligomers and aliphatic polyester acrylate oligomers.

Of these, ethoxylated pentaerythritol tetraacrylate and dipentaerythritol hexaacrylate (DPHA) are preferred.

When a multifunctional (meth)acrylate having a functionality of four or more is included, an amount thereof below 20 wt% of the overall photocurable composition is desirable because thickening of the composition is prevented, in addition to which the photocurability and abrasion resistance are good.

### <(F) Ultraviolet Absorber>

The photocurable composition of the invention may also include, within a range that does not detract from the advantageous effects of the invention, an ultraviolet absorber. Exemplary ultraviolet absorbers include benzotriazole, triazine, benzophenone and benzoate-type ultraviolet absorbers. Specific examples include 2-[2-hydroxy-5-[2-(methacryloyloxy)ethyl]phenyl]-2H-benzotriazole (RUVA-93, from Otsuka Chemical Co., Ltd.), 2,4-dihydroxybenzophenone (from Tokyo Chemical Industry Co., Ltd.), 2,3,4-trihydroxybenzophenone (Tokyo Chemical Industry Co., Ltd.), 2,2',4,4'-tetrahydroxybenzophenone (Tokyo Chemical Industry Co., Ltd.), 2,2'-dimethoxy-4,4'-dimethoxybenzophenone (Tokyo Chemical Industry Co., Ltd.), Tinuvin 405 (from BASF; 2-[4-[(2-hydroxy-3-(2'-ethyl)hexyl)oxy]-2-hydroxyphenyl]-4,6-bis(2,4-dimethylphenyl)-1,3,5-triazine), Tinuvin 400 (from BASF; 2-[4-{(hydroxy-3-dodecyloxypropyl)oxy}-2-hydroxyphenyl]-4,6-bis(2,4-dimethylphenyl)-1,3,5-triazine), Tinuvin 479 (from BASF; 2-[2-hydroxy-4-(1-octyloxycarbonylethoxy)phenyl]-4,6-bis(4-phenylphenyl)-1,3,5-triazine, and the ultraviolet absorbers mentioned in JP Nos. 6156214 and 6354665. One of these ultraviolet absorbers may be used singly or two or more may be used together.

Of these, 2-[2-hydroxy-5-[2-(methacryloyloxy)ethyl]phenyl]-2H-benzotriazole, 2-[2-hydroxy-4-(1-octyloxycarbonylethoxy)phenyl]-4,6-bis(4-phenylphenyl)-1,3,5-triazine and the ultraviolet absorbers mentioned in JP No. 6354665 are preferred.

When an ultraviolet absorber is used, the content thereof based on the photocurable composition is preferably from 1 to 15 wt%, and more preferably from 5 to 10 wt%. An ultraviolet absorber content of 1 wt% or more is desirable because the weatherability improves. A content of 5 wt% or less is desirable because yellowing, curing defects and a decrease in abrasion resistance can be prevented.

### <Other Additives>

The photocurable composition of the invention may include, within ranges that do not detract from the advantageous effects of the invention, additives such as polymerization inhibitors, antioxidants, light stabilizers and leveling agents.

Examples of polymerization inhibitors include hydroquinone, p-methoxyphenol, t-butylcatechol, phenothiazine, benzofuroxan, nitrobenzene, 2-methyl-2-nitrosopropane dimer and N-t-butyl-α-phenylnitrone.

When a polymerization inhibitor is used, the amount included, based on the weight of the organosilicon compound having (meth)acryloyl groups used in the composition, is from about 100 ppm to about 10,000 ppm.

Exemplary antioxidants include hindered amine and hindered phenol type antioxidants.

Examples of hindered amine type antioxidants include, but are not limited to, N,N',N",N"'-tetrakis(4,6-bis(butyl-(N-methyl-2,2,6,6-tetramethylpiperidin-4-yl)amino)-triazin-2-yl)-4,7-diazadecan-1,10-diamine, dibutylamine/1,3,5-triazine/N,N'-bis(2,2,6,6-tetramethyl-4-piperidyl-1,6-hexamethylenediamine/N-(2,2,6,6-tetramethyl-4-piperidyl)butylamine polycondensate, poly[{6-(1,1,3,3-tetramethylbutyl)amino-1,3,5-triazine-2,4-diyl}-{(2,2,6,6-tetramethyl-4-piperidyl)imino}hexamethylene {(2,2,6,6-tetramethyl-4-piperidyl)imino}], polymers of dimethyl succinate and 4-hydroxy-2,2,6,6-tetramethyl-1-piperizine ethanol, [the reaction product of decanedioic acid bis(2,2,6,6-tetramethyl-1-(octyloxy)-4-piperidyl) ester, 1,1-dimethyl ethyl hydroperoxide and octane (70 wt%)]-polypropylene (30 wt%), bis(1,2,2,6,6-pentamethyl-4-piperidyl) [[3,5-bis(1,1-dimethylethyl)-4-hydroxyphenyl]methyl] butyl malonate, methyl 1,2,2,6,6-pentamethyl-4-piperidyl sebacate, bis(2,2,6,6-tetramethyl-4-piperidyl) sebacate, bis(1,2,2,6,6-pentamethyl-4-piperidyl) sebacate, 1-[2-[3-(3,5-di-tert-butyl-4-hydroxyphenyl)propionyloxy]ethyl]-4-[3-(3,5-di-tert-butyl-4-hydroxyphenyl)propionyloxy]-2,2,6,6-tetramethylpiperidine, 4-benzoyloxy-2,2,6,6-tetramethylpiperidine and 8-acetyl-3-dodecyl-7,7,9,9-tetramethyl-1,3,8-triazaspiro[4.5]decan-2,4-dione.

Examples of hindered phenol type antioxidants include, but are not limited to, pentaerythritol tetrakis[3-(3,5-di-tert-butyl-4-hydroxyphenyl)propionate], thiodiethylene bis[3-(3,5-di-tert-butyl-4-hydroxyphenyl)propionate], octadecyl-3-(3,5-di-tert-butyl-4-hydroxyphenyl)propionate, N,N'-hexan-1,6-diylbis[3-(3,5-di-tert-butyl-4-hydroxyphenylpropionamide)], 3,5-bis(1,1-dimethylethyl)-4-hydroxy-C₇₋₉ branched alkyl esters of benzenepropanoic acid, 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexane-tert-butyl-4-a,a',a"-(mesitylene-2,4,6-tolyl)tri-p-cresol, calcium diethylbis[[[3,5-bis-(1,1-dimethylethyl)-4-hydroxyphenyl]methyl]phosphonate], 4,6-bis(octylthiomethyl)-o-cresol, ethylene bis(oxyethylene) bis[3-(5-tert-butyl-4-hydroxym-tolyl)propionate], hexamethylene bis[3-(3,5-di-tert-butyl-4-hydroxyphenyl) propionate], 1,3,5-tris(3,5-di-tert-butyl-4-hydroxybenzyl)-1,3,5-triazine-2,4-6-(1H, 3H, 5H)-trione, the reaction product of N-phenylbenzeneamine and 2,4,4-trimethylpentene, and 2,6-di-tert-butyl-4-(4,6-bis(octylthio)-1,3,5-triazine-2-ylamino)phenol.

The above antioxidants may be used singly or two or more may be used together.

Exemplary light stabilizers include benzotriazole, hindered amine and benzoate-type compounds.

Hindered amine-type compounds are preferred as the light stabilizer. Of these, tertiary amine-containing hindered amine-type light stabilizers are preferred for improving the shelf stability of the composition. Examples of tertiary amine-containing hindered amine-type light stabilizers include Tinuvin 622LD, Tinuvin 144, Tinuvin 123 and CHIMASSORB 119FL (all from BASF); MARK LA-57, LA-62, LA-67 and LA-63 (all from Asahi Denka KK); and Sanol LS-765, LS-292, LS-2626, LS-1114 and LS-744 (all from Sankyo KK).

Examples of leveling agents include KP-341 from Shin-Etsu Chemical Co., Ltd., BYK-180 and BYK-190 from BYK Chemie, and LE-604 from Kyoeisha Chemical Co., Ltd.

Aside from the above additives, where necessary, silicone resins, pigments, dyes, metal powders, heat reflectivity/absorptivity-imparting agents, flexibility-imparting agents, antistatic agents, antifouling agents, and water-repellency imparting agents may be added to the photocurable composition of the invention.

In the photocurable composition of the invention, to reduce the environmental impact, the volatile organic solvent content with respect to the overall composition is preferably less than 10 wt%, more preferably less than 5 wt%, and even more preferably less than 1 wt%. Here, "solvent" includes also ingredients that have not been intentionally added to the composition, such as reaction solvents that could not be completely removed by vacuum distillation and alcohols that formed due to the hydrolysis of alkoxysilyl groups.

The photocurable composition of the invention has a kinematic viscosity at 25°C which is preferably 100 mm²/s or less, more preferably 75 mm²/s or less, and even more preferably 50 mm²/s or less. A kinematic viscosity at 25°C of 100 mm²/s or less is desirable because the ease of coating is good, in addition to which coating techniques suitable for applying low-viscosity liquids, such as flow coating and spray coating in particular, become possible. The kinematic viscosity (mm²/s) can be measured using a Cannon-Fenske viscometer (Sibata Scientific Technology Ltd.).

### [Cured Product]

The photocurable composition of the invention can be cured by ultraviolet light irradiation in an open-air, nitrogen or other atmosphere. Examples of lamps having wavelength ranges at which reaction is possible include high-pressure mercury vapor lamps (UV-7000) and metal halide lamps (MHL-250, MHL-450, MHL-150, MHL-70) from Ushio, Ltd., metal halide lamps from JMtech (JM-MTL2KW), ultraviolet irradiation lamps from Mitsubishi Electric Corporation (OSBL360), ultraviolet irradiation devices from Japan Storage Battery Co., Ltd. (UD-20-2), fluorescent lamps from Toshiba Corporation (FL-20BLB), and H lamps, H+ bulbs, D bulbs, Q blubs and M bulbs from Fusion UV Systems, Ltd.

The irradiation dose is preferably from 100 to 12,000 mJ/cm², more preferably from 300 to 8,000 mJ/cm², and even more preferably from 500 to 6,000 mJ/cm².

It has been confirmed that when the composition of the invention is cured by ultraviolet irradiation in an open-air atmosphere, the abrasion resistance in particular tends to be good. It is thus preferable to irradiate the inventive composition with ultraviolet light in an open-air atmosphere.

### [Coated Articles]

A coated article can be obtained by applying the photocurable composition of the invention onto at least one side of a substrate, either directly or over at least one other layer, and then curing the applied composition by means of the above-described light irradiation to form a film.

Examples of the substrate include, but are not particularly limited to, plastic molded bodies, wood products, ceramics, glass, metal, and composites of these.

In addition, these substrates whose surfaces have been treated, that is, substrates that have been subjected to chemical conversion, corona discharge treatment, plasma treatment or treatment with an acid or alkali solution, and decorative plywood in which the substrate proper and the surface layer are covered with different types of coatings can be used. In particular, when a cured film made of the photocurable composition of the invention has been formed on a polycarbonate substrate, it is possible to improve the abrasion resistance and weatherability of the polycarbonate.

Also, a coating of the photocurable composition of the invention may be applied to a substrate surface on which another functional layer has already been formed.

Examples of such other functional layers include a primer layer, rustproofing layer, gas barrier layer, waterproofing layer and heat-shielding layer. Any of these may be formed beforehand as a single layer or a plurality of layers on the substrate.

The coated article may be additionally coated, on a surface thereof where a cured film of the above composition has been formed, with one or a plurality of layers such as a vapor deposition layer obtained by chemical vapor deposition (CVD), hardcoat layer, rustproofing layer, gas barrier layer, waterproofing layer, heat-shielding layer, anti-smudging layer, photocatalyst layer or antistatic layer. In addition, the coated article may be coated, on a side opposite from the surface where a cured film composed of the above composition has been formed, with one or a plurality of layers such as a hardcoat layer, rustproofing layer, gas barrier layer, waterproofing layer, heat-shielding layer, anti-smudging layer, photocatalyst layer or antistatic layer.

The method of applying the photocurable composition of the invention may be suitably selected from among known techniques. For example, various coating methods such as brush coating, spraying, dipping, flow coating, roll coating, curtain coating, spin coating and knife coating may be used.

The thickness of the cured film on the coated article of the invention is not particularly limited and may be suitably selected according to the intended application. However, a thickness of from 0.1 to 50 µm is preferred. To achieve a good cured film hardness and abrasion resistance, achieve stable long-term adhesion and keep cracks from arising, a thickness of from 1 to 20 µm is more preferred. The film thickness can be suitably adjusted by means of, for example, the amount of application.

One characteristic of the coated article of the invention is the ability of the cured film to transmit visible light. The visible-light transmittance is generally evaluated in terms of the haze (%) of the cured film, with a smaller haze indicating a better visible-light transmittance. The value measured with the NDH 2000 (Nippon Denshoku Industries Co., Ltd.) haze meter may be used as the haze. In general, the greater the film thickness, the larger the haze of the cured film. In the coated article of the invention, at a cured film thickness of 5 µm or less, the haze is preferably 2.0 or less, more preferably 1.5 or less, and even more preferably 1.0 or less.

Another feature of the coated article of the invention is the excellent abrasion resistance of the cured film. The abrasion resistance is evaluated by, in a Taber abrasion test in accordance with ASTM 1044, mounting an SC-10F abrasion wheel on the abrasion tester, measuring the haze of the cured film after 500 rotations under a load of 500 gf, and comparing the haze difference (ΔHz, % points) before and after testing. A smaller ΔHz indicates a better abrasion resistance. In the coated article of the invention, ΔHz is preferably 10 or less, more preferably 8 or less, and even more preferably 6 or less.

### EXAMPLES

Synthesis Examples, Examples and Comparative Examples are given below by way of illustration, although the invention is not limited by these Examples.

### [1] Preparation of Surface-Modified Silica Dispersion

### [Synthesis Example 1]

### • Step (α):

In a one-liter glass reactor equipped with a stirrer, a dropping funnel and a thermometer, 396 g of methanol, 16 g of water and 20 g of 28 wt% ammonia water were added and mixed together. This solution was adjusted to 50°C and the simultaneous dropwise addition thereto of 323 g of tetramethoxysilane and 81 g of 5.5 wt% ammonia water was begun under stirring. Following the completion of dropwise addition, stirring at 50°C was continued for 1 hour, thereby carrying out hydrolysis and giving a sol-gel silica particle dispersion. The resulting dispersion had a nonvolatiles content (105°C, 3 hours) of 18 wt%.

### • Step (β):

A water-methanol dispersion of surface-modified silica particles (A-1) was obtained by adding 22.6 g of 3-methacryloxypropyltrimethoxysilane at 25°C to 837 g of the sol-gel silica particle dispersion obtained in Step (α) above, continuing to stir for 2 hours, and then adding 15.1 g of trimethylsilanol (LS-310, from Shin-Etsu Chemical Co., Ltd.) and continuing to stir for 1 hour.

### • Step (γ):

1,6-Hexanediol diacrylate (HDDA; component B-1, from Daicel Corporation) was added at 25°C to the water-methanol dispersion of surface-modified silica particles (A-1) obtained in Step (β), in an amount equal to the weight of the silica particles, following which the low-boiling ingredients in this dispersion were distilled off at 50°C and under reduced pressure (6,650 Pa), giving a 50 wt% HDDA (B-1) dispersion of surface-modified silica particles (A-1).

### [Synthesis Example 2]

Aside from changing the 3-methacryloxypropyltrimethoxysilane in Step (β) of Synthesis Example 1 above to 27.5 g of 8-methacryloxyoctyltrimethoxysilane (KBM-5803, from Shin-Etsu Chemical Co., Ltd.), a 50 wt% HDDA (B-1) dispersion of surface-modified silica particles (A-2) was obtained in the same way as in Synthesis Example 1.

### [Synthesis Example 3]

Aside from changing the 3-methacryloxypropyltrimethoxysilane in Step (β) of Synthesis Example 1 above to 20.0 g of methacryloxymethyltrimethoxysilane (from Gelest), a 50 wt% HDDA (B-1) dispersion of surface-modified silica particles (A-3) was obtained in the same way as in Synthesis Example 1.

### [2] Evaluation of Surface-Modified Silica Particle Properties

The following measurements were carried out on the surface-modified silica particles (A-1) to (A-3) obtained in Synthesis Examples 1 to 3. The results are shown in Table 1.

### [Particle Diameter]

The dispersion was diluted with methanol to a surface-modified silica particle concentration of 1 wt%, the particle size distribution after 10 minutes of ultrasonic irradiation was measured with a dynamic light scattering/laser Doppler Nanotrac particle size analyzer (UPA-EX150, from Nikkiso Co., Ltd.), and the volume-based median diameter (D50) and D90/D10 value for the particles were computed.

### [Q⁴/Q]

The ratio Q⁴/Q of the peak area from -105 to -130 ppm (Q⁴) to the peak area from -80 to -130 ppm (Q) in the spectrum obtained by carrying out ²⁹Si-NMR measurement under the following conditions was computed.

| | |
|---|---|
| Apparatus: | pulsed Fourier transform-type nuclear magnetic resonance unit (JNM-ECX500II, from JEOL, Ltd.) |
| Magnetic field strength: | 11.75 T |
| Number of runs: | 10,640 |
| S/N ratio: | >5 |
| Sample tube material: | polytetrafluoroethylene |
| Solvent: | heavy chloroform |
| Reference material: | tetramethylsilane |
| Relaxation agent: | chromium(III) acetylacetonate |

### [Organosilicon Compound Content]

The content of organosilicon compound having (meth)acryloyl groups was computed as {[amount of (meth)acryloyl group-containing organosilicon compound added]/[weight of sol-gel silica before surface modification]} × 100 (wt%).

**[Table 1]**

| | Synthesis Example 1 | Synthesis Example 2 | Synthesis Example 3 |
|---|---|---|---|
| | (A-1) | (A-2) | (A-3) |
| D50 (nm) | 11 | 18 | 17 |
| D90/D10 | 2.7 | 2.6 | 2.8 |
| Q⁴/Q | 0.71 | 0.70 | 0.71 |
| Content of (meth)acryloyl group-containing organosilicon compound (wt% w/r silica) | 15 | 18 | 13 |

### [3] Preparation of Photocurable Composition

### [Examples 1-1 to 1-15, Comparative Examples 1-1 to 1-7]

Photocurable compositions were prepared by mixing the 50 wt% HDDA (B-2) dispersions of surface-modified silicas (A-1) to (A-3) obtained in Synthesis Examples 1 to 3 together with the ingredients indicated below in the compounding ratios (wt%) shown in Tables 2 and 4.

### Component (C): Trifunctional (Meth)acrylate

(C-1) Ethoxylated trimethylolpropane triacrylate (Miramer M3130, from MIWON)
(C-2) Trimethylolpropane triacrylate (Miramer M300, from MIWON)

### Component (D): Photoradical Initiator

(D-1) 2-Hydroxy-2-methyl-1-phenylpropan-1-one (Omnirad 1173, from IGM RESINS B.V.)
(D-2) 2,4,6-Trimethylbenzoyl diphenylphosphine oxide (Omnirad TPO-H, from IGM RESINS B.V.)

### Component (E): Multifunctional (meth)acrylates having a functionality of four or more

(E-1) Ethoxylated pentaerythritol tetraacrylate (Miramer M4004, from MIWON)
(E-2) Dipentaerythritol hexaacrylate (Miramer M600, from MIWON)

### Component (F): Ultraviolet Absorber

(F-1) 2-[2-Hydroxy-5-[2-(methacryloyloxy)ethyl]phenyl]-2H-benzotriazole (RUVA-93, from Otsuka Chemical Co., Ltd.
(F-2) Hydroxyphenyltriazine-type ultraviolet absorber (Tinuvin 479, from BASF Japan, Ltd.)
(F-3) Ultraviolet absorber of the following structural formula synthesized according to Synthesis Example 1 in JP No. 6354665

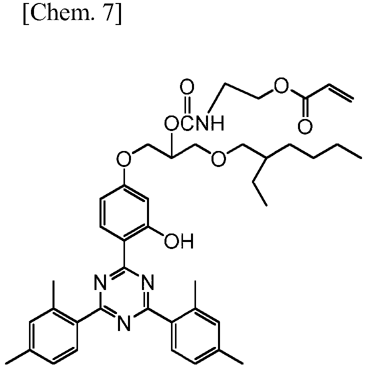

### [4] Evaluation of Photocurable Composition Properties

The following evaluation was carried out on the photocurable compositions obtained in Examples 1-1 to 1-15 and Comparative Examples 1-1 to 1-7.

### [Kinematic Viscosity]

The kinematic viscosity of the composition at 25°C was measured using a Cannon-Fenske viscometer (Sibata Scientific Technology Ltd.).

### [5] Production of Cured Films and Coated Articles

### [Examples 2-1 to 2-15 and Comparative Examples 2-1 to 2-7]

The compositions obtained in Examples 1-1 to 1-15 and Comparative Examples 1-1 to 1-7 were coated onto polycarbonate plates (thickness, 5 mm; available under the product name Takiron PC Clear 1600, from Takiron Co., Ltd.) with a #8 bar coater and, using a high-pressure mercury vapor lamp, were subsequently irradiated with 1,800 mJ/cm² (total energy of ultraviolet light at wavelengths of 300 to 390 nm, as measured with the Eye UV integrator UVPF-A1 (PD-365), from Iwasaki Electric Co., Ltd.) of ultraviolet light in an open-air atmosphere, thereby producing cured films having a thickness of 10 µm.

### [6] Evaluation of Cured Film Properties

The following evaluations of transparency and abrasion resistance were carried out on the above polycarbonate plates on which a cured film had been formed. The results are shown in Tables 3 and 5.

### [Transparency]

The haze (%) was measured using a haze meter (NDH 2000, from Nippon Denshoku Industries Co., Ltd.).

### [Abrasion Resistance]

In a Taber abrasion test in accordance with ASTM 1044, an SC-10F abrasion wheel was mounted on an abrasion tester, the haze of the cured film after 500 rotations under a load of 500 gf was measured with a haze meter (NDH 5000SP, from Nippon Denshoku Industries Co., Ltd.), and the difference (ΔHz, % points) with the value before the abrasion test was calculated.

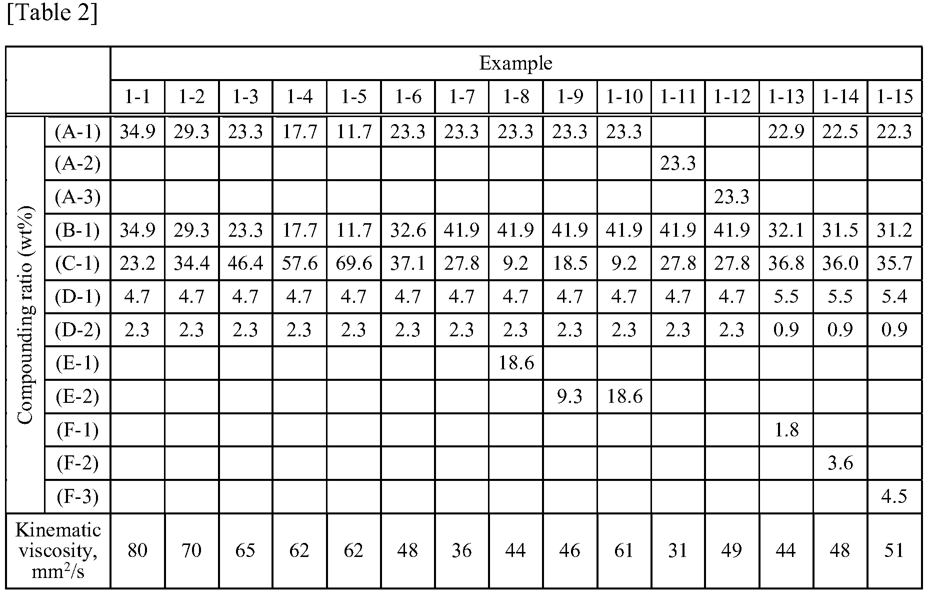

**[Table 3]**

| | Example | | | | | | | | | | | | | | |
|---|---|---|---|---|---|---|---|---|---|---|---|---|---|---|---|
| | 2-1 | 2-2 | 2-3 | 2-4 | 2-5 | 2-6 | 2-7 | 2-8 | 2-9 | 2-10 | 2-11 | 2-12 | 2-13 | 2-14 | 2-15 |
| Composition | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 |
| Transparency (haze) | 0.5 | 0.5 | 0.5 | 0.5 | 0.4 | 0.5 | 0.5 | 0.4 | 0.5 | 0.4 | 0.5 | 0.6 | 0.6 | 0.6 | 0.6 |
| Abrasion resistance (ΔHz) | 5.3 | 5.1 | 5.5 | 6.6 | 8.3 | 5.6 | 5.5 | 5.8 | 6.3 | 7.8 | 5.9 | 4.8 | 6.2 | 6.8 | 7.7 |

**[Table 4]**

| | | Comparative Example | | | | | | |
|---|---|---|---|---|---|---|---|---|
| | | 1-1 | 1-2 | 1-3 | 1-4 | 1-5 | 1-6 | 1-7 |
| Compounding ratio (wt%) | (A-1) | | | 34.9 | 34.9 | 34.9 | 34.9 | 42.4 |
| | (B-1) | 41.9 | 41.9 | 58.1 | 34.9 | 34.9 | 34.9 | 42.4 |
| | (C-1) | 51.1 | 27.8 | | | | | |
| | (C-2) | | | | | | | 8.5 |
| | (D-1) | 4.7 | 4.7 | 4.7 | 4.7 | 4.7 | 4.7 | 4.2 |
| | (D-2) | 2.3 | 2.3 | 2.3 | 2.3 | 2.3 | 2.3 | 2.5 |
| | (E-1) | | | | 23.2 | 11.6 | | |
| | (E-2) | | 23.3 | | | 11.6 | 23.2 | |
| Kinematic viscosity, mm²/s | | 18 | 37 | 19 | 108 | 147 | 203 | 117 |

**[Table 5]**

| | Comparative Example | | | | | | |
|---|---|---|---|---|---|---|---|
| | 2-1 | 2-2 | 2-3 | 2-4 | 2-5 | 2-6 | 2-7 |
| Composition | 1-1 | 1-2 | 1-3 | 1-4 | 1-5 | 1-6 | 1-7 |
| Transparency (haze) | 0.5 | 0.5 | 4.2 | 0.5 | 0.4 | 0.4 | 1.2 |
| Abrasion resistance (ΔHz) | 26.1 | 16.3 | N/A* | 5.9 | 7.9 | 9.3 | 4.8 |

| | | | | | | | |
|---|---|---|---|---|---|---|---|
| *Could not be measured due to clouding of the film | | | | | | | |

As shown in Table 2, the photocurable compositions in Examples 1-1 to 1-15 which satisfy the requirements of this invention had low viscosities. As shown in Table 3, the cured films obtained from these compositions exhibited excellent transparency and abrasion resistance.

On the other hand, as shown in Table 5, in Comparative Examples 2-1 and 2-2 which do not contain inorganic particles, the abrasion resistance was markedly inferior.

In Comparative Example 2-3 which does not include (C) a trifunctional (meth)acrylate, the film clouded, resulting in a major loss of transparency.

In Comparative Examples 1-4 to 1-6, in which the trifunctional (meth)acrylate (C) in the Example 1-1 formulation was substituted with a multifunctional (meth)acrylate having a functionality of 4 or more, the compositions had higher viscosities. Moreover, the results obtained in Comparative Examples 2-4 to 2-6 demonstrated that, as the content of dipentaerythritol hexaacrylate increased, the abrasion resistance worsened.

Moreover, in cases where there was a surplus of component (A) as in Comparative Example 1-7, the viscosity of the composition rose. In Comparative Example 2-7, the transparency was also inferior.

## Claims

1. A photocurable composition comprising:
(A) surface-modified inorganic particles which are obtained by chemically bonding from 1 to 30 parts by weight of at least one compound selected from organosilicon compounds of formula (1) below 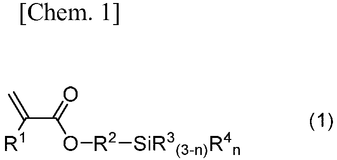 (wherein R¹ is a hydrogen atom or a methyl group, R² is an alkylene group of 1 to 20 carbon atoms, each R³ is independently a hydrogen atom or an alkyl group of 1 to 8 carbon atoms, each R⁴ is independently a hydroxyl group, an alkoxy group of 1 to 6 carbon atoms or a halogen atom, and n is an integer from 1 to 3) and hydrolyzates and condensates thereof to 100 parts by weight of inorganic particles and which have a median diameter of 1 to 60 nm in a volume-based particle size distribution,
(B) a difunctional (meth)acrylate,
(C) a trifunctional (meth)acrylate, and
(D) a photoradical initiator,
wherein the amount of component (A) included is from 10 to 35 wt% and the collective amount of components (A), (B) and (C) is at least 70 wt%.

2. The photocurable composition of claim 1, wherein the inorganic particles are silica particles.

3. The photocurable composition of claim 2, wherein the D90/D10 value in the volume-based particle size distribution of the surface-modified inorganic particles is 3.2 or less.

4. The photocurable composition of claim 2 or 3, wherein the surface-modified inorganic particles are sol-gel silica particles with a ratio Q⁴/Q of the peak area from -105 to -130 ppm (Q⁴) to the peak area from -80 to -130 ppm (Q) in the ²⁹Si-NMR spectrum of 0.8 or less that have been surface modified.

5. The photocurable composition of any one of claims 1 to 4, wherein one or more compound selected from silane compounds of formula (5) below and disilazane compounds of formula (6) below
R⁵₃SiY (5)
R⁵₃Si-NH-SiR⁵₃ (6)
(wherein each R⁵ is independently an alkyl group of 1 to 8 carbon atoms, and each Y is independently a hydroxyl group, an alkoxy group of 1 to 6 carbon atoms, an acyloxy group of 1 to 6 carbon atoms, an amino group or a halogen atom)
is additionally chemically bonded to the surface-modified inorganic particles.

6. The photocurable composition of any one of claims 1 to 5, wherein the composition has a volatile organic solvent content with respect to the overall composition of less than 10 wt%.

7. The photocurable composition of any one of claims 1 to 6, wherein the composition has a kinematic viscosity at 25°C of 100 mm²/s or less.

8. A cured product obtained by curing the photocurable composition of any one of claims 1 to 7.

9. An article that is coated with the cured product of claim 8.
